# EUROPEAN PATENT APPLICATION

(11) **EP 1 593 477 A1**
(43) Date of publication of application: **09.11.2005**
(21) Application number: 03777401.5
(22) Date of filing: 09.12.2003
(51) Int. Cl.: B29C 59/02

(54) **DEVICE, METHOD, AND SYSTEM FOR PATTERN FORMING**

(30) Priority: 15.01.2003 JP 2003007486
(71) Applicant: Scivax Corporation, Tokyo 103-0004 (JP); Hakuto Co., Ltd, Shinjuku-ku, Tokyo 160-8910 (JP)
(72) Inventor: Goto, Hiroshi, Ushiku-city, Ibaraki 300-1216 (JP); Fujii, Mitsuru, Adachi-ku, Tokyo 123-0841 (JP); Yoshioka, Haruo, Device Nanotech Res. Inst. Inc., Tokyo 100-0004 (JP); Kishi, Hideki, Device Nanotech Res. Inst. Inc., Tokyo 100-0004 (JP)
(74) Representative: HOFFMANN EITLE
(86) International application number: PCT/JP2003/015731
(87) International publication number: WO 2004/062886

(57) **Abstract**

In a pattern formation device 10, a mold 100 for forming a pattern on a substrate 200 is heated to a temperature T1 equal to or higher than the glass transition temperature Tg of the surface area of the substrate 200 and in this state, the mold 100 is pressed against the substrate 200 having a temperature equal to or lower than the glass transition temperature Tg to transfer the pattern of the mold 100. Then, a heater is turned off, the mold 100 is cooled by a cooling block, and the mold 100 is then separated from the substrate 200. A pattern forming system comprising a feeding device taking substrates 200 one by one from a magazine and feeds the same to the pattern formation device 10 is preferably formed.

## Description

### BACKGROUND OF THE INVENTION

### Field of the Invention

The present invention relates to a pattern formation device, a pattern formation method and a pattern formation system for forming a predetermined pattern on a processing object such as a substrate.

### Description of the Related Art

Reduced projection exposure systems have been generally used for forming a fine circuit pattern represented by a LSI (large scale integrated circuit) on a semiconductor substrate (hereinafter referred tosimply assubstrate). In the method, using an exposure device called a stepper, a circuit pattern rendered on a reticle (mask) is proj ection-exposed on a resist surface on a substrate through a reduced optical system, and the exposure is repeated over the entire region of the substrate to form a predetermined fine circuit pattern on the substrate.

For increasing the integration degree of the substrate formed in this way, it is necessary to reduce the line width of the circuit pattern, and it is expected that the line width will shift from a currently mainstream line width of 130 nm to a line width of 100 nm or less in the future.

For keeping up with this trend, it is necessary to reduce a wavelength of a light source that is used in projection exposure, and in the present circumstances, manufactures of exposure devices are developing exposure devices using light of short wavelengths such as ultraviolet (UV) light, deep ultraviolet (DUV) light and extreme ultraviolet light (EUV) light as light sources.

However, if light of a short wavelength of an ultraviolet laser light source or the like is used as a light source, distortions and light source noises occur in a lens, a mirror and a light source and the like constituting a projection optical system of exposure devices, due to a small change in temperature and external vibrations. Thus, precise temperature control and a vibration isolating structure are required for the exposure device, and resultantly the price of the reduced projection exposure device constituted by a series of such devices tends to be extremely high (e. g. several billions yens). In addition, the exposure device itself has a large size, and therefore an installation space and electric power consumption tend to increase.

For the purpose of preventing a sharp rise in scale of the device and process costs, a nano imprinting process technique has been introduced as a method for forming a very fine pattern on a substrate (see, for example, G.M. Whitesides, J. C. Love, "Technique for Fabricating Nano Structures", "Nikkei Science", Nihon Keizai Shimbun, Inc. December 1, 2001, vol. 31, No. 12, pages.30-41).

The process of the technique is carried out by a method in which a mold having a desired pattern formed on its surface is used, a substrate is heated to a temperature exceeding the glass transition temperature of a resist material provided on the substrate, and the mold is pressed against the surface of the substrate in this state to transfer the pattern. In this method, an expensive laser light source and optical system are not required, and a shape formed on the mold can be directly transferred with high accuracy despite a simple structure based on a heating heater and a press device, and it has been reported that thin lines having a line width of about 20 nm were formed (see, for example, C.M. Sotomayor, et. al., "Nanoimprint lithography: an alternative nanofabrication approach" "Materials Science & Engineering C", Elsevier Science, 2002, vol.989, pages.1-9).

However, the process described above has the following problems.

In the process described above, a series of steps are carried out in which the substrate is heated to a temperature equal to or higher than the glass transition temperature, the mold is pressed against the substrate in this state to transfer the pattern, the substrate is then cooled to a temperature equal to or lower than the glass transition temperature, and the mold is then separated from the substrate to remove the mold.

In such steps, the substrate is heated and cooled and for this purpose, a system of heating and cooling the entire substrate by a heater is used. The heater is normally provided on a table supporting the substrate. If the substrate has an increased size, the heat capacities of the substrate and the table to be heated and cooled by the heater increase, and resultantly time of several tens of seconds to several tens of minutes is required for heating and cooling the substrate to equalize the temperature of the entire substrate.

This is a big factor that prevents enhancement of through-put in pattern formation.

In fabrication of an integrated circuit, a large number of chips are generally formed on a substrate (wafer) having a large area to improve productivity and reduce device costs. If a mold that is pressed against the entire region of a currently mainstream 6 to 12 inch substrate in one batch can be fabricated, a pattern can be formed on the entire region of the substrate in one pressing step, and therefore efficiency is extremely improved. For this purpose, it is necessary to increase the size of a mold for forming the entire surface of a substrate having a size of 6 to 12 inches in one batch.

However, in the process described above, the shape of a mold is transferred to and formed on a substrate, it is therefore required to correctly fabricate the mold, and in this respect, there is a problem in increasing the size of the mold. Namely, if the size of the mold is to be increased, it is difficult to ensure the degree of parallelization between the mold and the substrate and temperature uniformity. If the size of the mold is increased, a variation in dimension due to thermal expansion and shrinkage associated with a change in temperature of the mold accordingly increases, and it is therefore difficult to control a dimension with a change in temperature for ensuring accuracy. Moreover, there is a problem such that the mold tends to be engaged in the substrate when the mold is to be removed from the substrate after cooling due to a difference in thermal shrinkage factor between the mold and the substrate. In addition, as the size of the mold is increased, a force required when the mold is pressed against the substrate and removed therefrom increases, and a press mechanism of high output is thus required, leading to an increase in size and cost of the device as a whole.

The present invention has been made based on these technical problems, and its object is to provide a pattern formation device, a pattern formation method and the like capable of reducing costs and improving efficiency in formation of a pattern.

### SUMMARY OF THE INVENTION

Under such an object, a pattern formation device of the present invention is characterized by comprising a mold for forming a predetermined pattern on a substantially plate-like substrate to be a processing object, a heating unit heating the mold, a substrate holding unit holding the substrate, and a press mechanism pressing the mold against the substrate held by the substrate holding unit.

In this way, the heated mold is pressed against the substrate by the press mechanism to heat the substrate from the surface area side, and thus a predetermined pattern can be formed on the surface area of the substrate by the mold.

If the surface area of the substrate is formed of a material having a glass transition temperature, the surface area of the substrate can be softened by heating the substrate to a temperature close to, equal to or higher than the glass transition temperature by the mold. If the surface area of the substrate is formed of a material having no glass transition temperature, the surface area of the substrate can be softened by heating the mold to a temperature close to, equal to or higher than a temperature at which the material is softened.

At this time, it is preferable that the substrate held by the substrate holding unit is kept at the glass transition temperature or lower by a temperature maintaining unit provided in the substrate holding unit.

Such a device is especially suitable when a pattern is formed only on the surface area of the substrate with the mold for substrates such as a silicon wafer, a photonics crystal and a semiconductor electronic circuit substrate, heat of the mold is first transmitted directly to the surface area of the substrate on which the pattern is formed, only areas to be processed are efficiently heated, regions other than the areas to be processed are never unnecessarily heated, and heat can be used effectively.

The mold is pressed against the substrate by the press mechanism, but the mold may be moved with respect to the substrate in a fixed state, or conversely the substrate may be moved with respect to the mold in a fixed state to press the mold against the substrate.

It is preferable that the heating unit comprises a controller controlling the temperature of the mold, and control is performed by the controller so that the mold is held at a temperature lower than the glass transition temperature of the substrate in a state in which the mold and the substrate are separated from each other, the mold is held at a temperature close to, equal to or higher than the glass transition temperature of the substrate in a state in which the mold is pressed against the substrate. At this time, it is more preferable that the mold is previously held at a temperature close to, equal to or higher than the glass transition temperature of the substrate in the state in which the mold is pressed against the substrate. In this case, in the state in which the mold and the substrate are separated from each other, heating of the mold is started from a temperature lower than the glass transition temperature of the substrate to a temperature close to, equal to or higher than the glass transition temperature of the substrate in predetermined timing. Unlike this, the present invention does not aggressively preclude a configuration in which the mold is pressed against the substrate, and then preliminary heating of the mold to a temperature close to, equal to or higher than the glass transition temperature of the substrate is started.

At this time, timing for actuating the heating unit for holding the mold at a temperature close to, equal to or higher than the glass transition temperature of the substrate is not limited as long as the mold is held at a temperature close to or higher than the glass transition temperature of the substrate in a state in which the mold is pressed against the substrate and a pattern is formed.

Generally, in removing the mold that has formed a pattern on the substrate, the substrate is cooled to fix the pattern. At this time, if a cooling unit cooling the mold is further provided, the pattern area of the substrate can be speedily cooled via the mold. Such a configuration is especially suitable when the mold is continuously pressed against the substrate multiple times.

The substrate held by the substrate holding unit may be heated by a substrate heating unit in addition to heating the mold by the heating unit.

Further, in the press mechanism, the amount of press of the mold against the substrate can be switched in a plurality of levels. In the press mechanism, heat of the heated mold is transmitted to the substrate when the mold is pressed against the substrate in a first amount of press, and a pattern is formed on the substrate with the mold when the mold is pressed against the substrate in a second amount of press different from the first amount of press.

The amount of press of the mold against the substrate mentioned herein is an amount of press of the mold (dimension, depth), based on the surface of the substrate, and the first amount of press should only allow heat of the mold to be transmitted to the substrate, and therefore may be at least a dimension allowing the mold to contact the substrate (which may include zero).

For this purpose, a load applied from the mold to the substrate by the press mechanism, and a movement stroke of the mold relative to the substrate may be controlled.

The present invention may also be considered as a pattern formation device which comprising: a mold for forming a predetermined pattern on a processing obj ect; an obj ect holding unit holding the processing object; a press mechanism pressing the mold against the processing object held by the processing object holding unit; and a heating means heating either one of the processing object and the mold which has a heat capacity smaller than the other.

In this way, if either one of the processing object and the mold which has a heat capacity smaller than the other is heated, the heating can be performed in a short time.

Also in a configuration comprising a movement mechanism moving the mold and/or the processing object so that the mold faces a plurality of regions of the processing object held by the object holding unit, it is possible to make the mold smaller than the processing object, and to reduce the heat capacity thereof. In such a case, the heating means heats the mold. In the pattern formation device comprising such a configuration, the mold is moved by the movement mechanism to make the mold face a plurality of regions of the processing object, the mold is pressed against the processing object in each region, whereby pattern transfer with the mold is performed multiple times on one processing object.

Here, in the movement mechanism, the mold and the processing object are moved relative to each other, and the mold and the processing object may be moved, or only one of the mold and the processing object may be moved.

In the heating means, according to timing for pressing the mold against the processing object by the press mechanism, the temperature of the mold may be varied in a range which is based on a temperature at which the processing object is softened.

Further, the press mechanism comprises a load controller controlling a load applied from the mold to the processing object, and the load controller can apply a first load and a second load different from the first load one after another from the mold to the processing object.

As the heating means, a ceramic heater is preferably used in terms of responsivity.

If a mold holding unit holding the mold and connected to the press mechanism is further provided, it is preferable that the mold holding unit is brought into surface contact with the mold, and holds the mold by means of an electrostatic force.

The present invention may also be considered as a pattern formation method for forming a predetermined pattern on a substrate with a mold. The method is characterized by comprising a step of a heating step of heating a mold to a predetermined temperature based on the glass transition temperature of a substrate, and a pattern forming step of pressing the mold against the substrate to form a pattern.

The method may further include a cooling step of cooling the mold to a predetermined temperature lower than the glass transition temperature of the substrate after pressing the mold against the substrate, and a mold removing step of separating the cooled mold from the substrate. Particularly, if stamping is performed multiple times on one substrate, a step comprising the heating step, the pattern forming step, the cooling step and the mold removing step is repeatedly carried out for each of a plurality of regions of the substrate.

The method may further include a heat transmitting step of transmitting heat of the mold to the substrate prior to the pattern forming step. As a result, the surface area of the substrate receives transmission of heat of the mold, and is heated to a temperature close to the predetermined temperature based on the glass transition temperature and softened. In this state, the pattern forming step is carried out.

The present invention may be considered as a pattern formation system comprising a pattern formation device forming a predetermined pattern on a substantially plate-like substrate to be a processing object, and a feeding device feeding the substrate to the pattern formation device and taking out the same. In this case, the pattern formation device may comprise a mold for forming a predetermined pattern on the substrate, a heating unit heating either one of the substrate and the mold which has a heat capacity smaller than the other, a substrate holding unit holding the substrate, and a press mechanism pressing the mold against the substrate held by the substrate holding unit.

As a result, the substrate is automatically fed to the pattern formation device by the feeding device, where by pattern formation on a plurality substrates can be continuously performed.

A plurality of substrates may be conveyed one after another by a conveyor or the like, and fed to the pattern formation device by the feeding device, but they may also be conveyed using a magazine containing a plurality of substrates. In this case, the pattern formation system further comprises a magazine holding unit holding a magazine, and the feeding device takes out substrates one by one from the magazine held by the magazine holding unit, and feeds the same to the pattern formation device. Further, for improving efficiency, the magazine holding unit can preferably hold a plurality of magazines. In this case, the magazine holding unit may have a configuration in which while the substrate is fed from one magazine to the pattern formation device by the feeding device, another magazine can be replaced.

### BRIEF DESCRIPTION OF THE DRAWINGS

FIG. 1 a perspective view of a pattern formation device in this embodiment;
FIG. 2 is a view showing the configuration of a substrate holding unit and a mold holding unit;
FIG. 3 is a sectional view showing the configuration of the substrate holding unit;
FIGS. 4A and 4B are views each showing an example of a substrate as a processing object, wherein FIG. 4A is a view showing an example of a substrate on which a substrate shape is formed directly from a molding material, and FIG. 4B is a view showing a substrate having a thin film coating layer formed on the surface of the main body of the substrate;
FIGS. 5A, 5B, 5C and 5D are views showing a flow of a step of a pattern formation on a substrate with a mold, wherein FIG. 5A is a view showing a state in which the mold is separated from the substrate, FIG. 5B is a view showing a state in which the mold is brought into contact with the substrate, FIG. 5C is a view showing a state in which the mold is engaged in the substrate, and FIG. 5D is a view showing a state in which the mold is separated from the substrate;
FIG. 6 is a view showing a change in temperature of a heater, a substrate and the surface area of the substrate during formation of a pattern;
FIG. 7 is a view showing one example of a substrate on which a pattern is formed;
FIG. 8 is a view showing another example of a substrate on which a pattern is formed;
FIGS. 9A and 9B are views showing still another example of a substrate on which a pattern is formed, wherein FIG. 9A is a plan view, and FIG. 9B is a front sectional view of FIG. 9A;
FIG. 10 is a plan view showing the configuration of a pattern formation system; and
FIG. 11 is a view showing an example of a notch formed on a substrate for registration.

### DETAILED DESCRIPTION OF THE PREFERRED EMBODIMENTS

This invention will be described in detail below based on embodiments shown in the accompanying drawings.

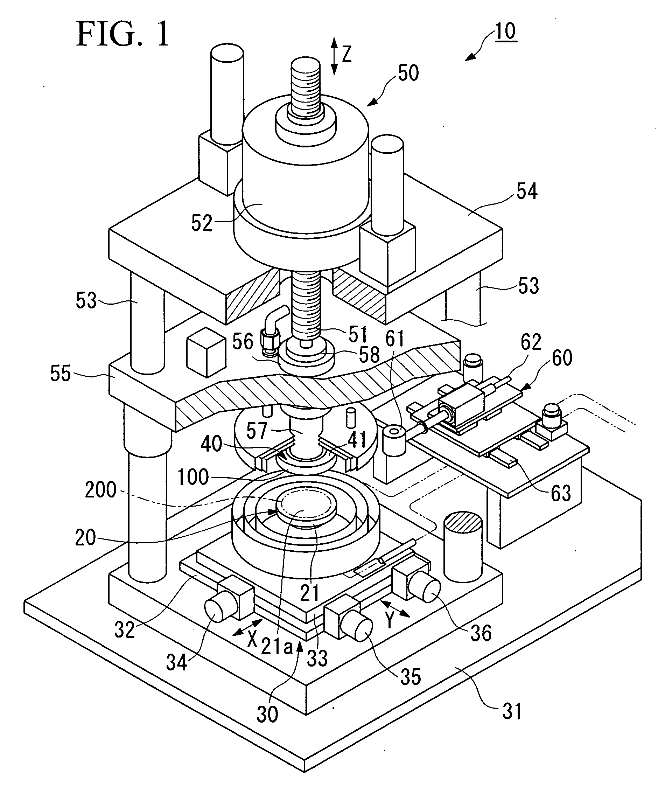

FIG. 1 is a view for explaining the general configuration of a pattern formation device in this embodiment.

As shown in FIG. 1, a pattern formation device 10 transfers a mold 100 having a predetermined pattern formed by projections and depressions onto a substrate (processing object) 200 to form the pattern on the substrate 200.

The pattern formation device 10 comprises a substrate holding unit 20 holding the substrate 200 to be processed, a movement mechanism 30 moving the substrate holding unit 20 in a two-dimensional direction, a mold holding unit 40 holding the mold 100 for forming a predetermined pattern on the substrate 200, a mold driving mechanism (press mechanism) 50 drive the mold 100 held by the mold holding unit 40, and an alignment mechanism 60 for determining the relative position between the substrate 200 and the mold 100.

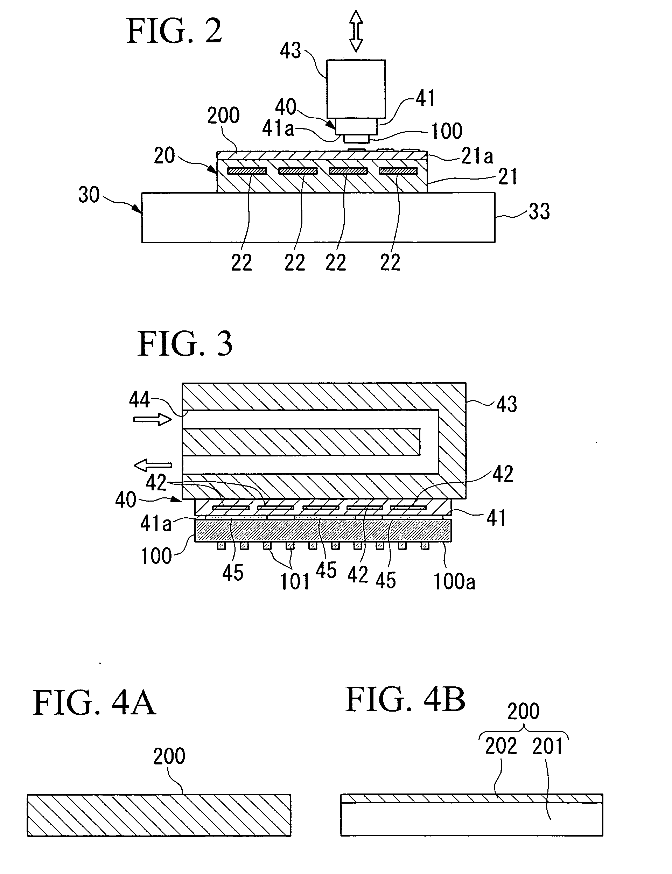

As shown in FIGS. 1 and 2, the substrate holding unit 20 holds the substrate 200 in a substantially horizontally supported state, and has a table (object holding potion) 21 having a support surface 21a on the top surface.

The table 21 is provided on the support surface 21a with a large number of vacuum holes (not shown), and a negative pressure is applied to the vacuum holes from a negative pressure source (not shown), whereby the substrate 200 can be held on the support surface 21a in an adsorptive manner.

As shown in FIG. 2, the table 21 includes a heater (substrate heating unit, temperature maintaining unit) 22 for heating the held substrate 200. The heater 22 has its operation controlled by a controller (not shown) so that the substrate 200 on the table 21 is kept at a predetermined constant temperature. For the heater 22, for example, a heat transmission heater, and a ceramic heater described later in detail may be suitably used.

As shown in FIG. 1, the movement mechanism 30 moves the table 21 holding the above substrate 200 in a two-dimensional direction within a plane parallel to the support surface 21a of the table 21, namely the surface of the substrate 200 held. The movement mechanism 30 has a lower base 32 provided on a base mount 31 and an upper base 33 provided on the lower base 32 to support the table 21.

The lower base 32 has an axis line in one direction (hereinafter referred to as X direction) and is connected to the base mount 31 via a ball screw 34 rotationally driven by a motor (not shown). The upper base 33 has an axis line in a direction orthogonally crossing the ball screw 34 (hereinafter referred to as Y direction) and is connected to the lower base 32 via a ball screw 35 rotationally driven by a motor (not shown). Further, the upper base 33 comprises an angle adjustment screw 36 adjusting an angle within the X-Y plane.

As a result, in the movement mechanism 30, the lower base 32 moves in the x direction on the base mount 31 by rotationally driving the ball screw 34, and the upper base 33 moves in the Y direction on the lower base 32 by rotationally driving the ball screw 35 orthogonally crossing the ball screw 34. That is, the table 21 holding the substrate 200 is moved in the two directions of X and Y within a two-dimensional plane parallel to the surface of the substrate 200 by the movement mechanism 30.

As shown in FIGS. 2 and 3, the mold holding unit 40 comprises a holding block (substrate holding unit) 41 having a support surface 41a on the lower surface and holding the mold 100 by the support surface 41a.

As shown in FIG. 3, the holding block 41 includes a heater (heating unit, heating means) 42 heating the mold 100. For the heater 42, for example, so called a ceramic heater formed of a ceramic material such as, for example, aluminum nitride and having a wiring as a heater electrode embedded therein is suitable. In this holding block 41, the temperature rises when a current is passed from a power supply (not shown) to the heater electrode, and the temperature decreases when the current is shut off. The ceramic heater is a heater responding so quickly that the temperature rises by approximate 1000 degrees in 10 seconds, for example. The supply of a current from a power supply to such a heater electrode is controlled by a controller (not shown).

The holding block 41 is provided on its upper surface side with a cooling block (cooling unit) 43. The cooling block 43 is formed of a metal, such as aluminum or copper, having a high thermal conductivity, a channel 44 is formed therein, and a cooling medium such as cooling water can be passed through the channel 44.

This cooling block 43 has a function of cooling the holding block 41 and the mold 100 by passing a cooling medium through the channel 44.

The holding block 41 is provided on the support surface 41a with a plurality of adsorption electrodes 45, and a current is passed through the adsorption electrodes 45 from a power supply (not shown) to generate an electrostatic force. In the holding block 41, the adsorption electrodes 45 come into surface contact with the mold 100, and the upper surface of the mold 100 is held in an adsorptive manner by an electrostatic attraction of the adsorption electrodes 45. The mold 100 originally has a high accuracy of processing, and therefore can be formed with its upper surface having a high flatness. The adsorption electrodes 45 on the holding block 41 side are formed with a high flatness, and the mold 100 is supported using the above described electrostatic attraction, whereby the degree of adhesion between the mold 100 and the adsorption electrodes 45 can be increased, and heat can be efficiently transmitted from the holding block 41 to the mold 100, compared with a structure fixing the mold 100 to the holding block 41 using a screw, clamp, and the like.

For the heater electrode of the heater 42, the supply of a current is controlled by the controller for controlling the temperature of the mold 100, while for the adsorption electrodes 45, a voltage is constantly applied to exhibit an adsorptive force except when the mold 100 is changed.

The mold 100 is adsorbed to the holding block 41 by an electrostatic force, while the substrate 200 is vacuum-adsorbed to the table 21. It can also be considered that the substrate 200 is adsorbed to the table 21 by electrostatic attraction, but such a configuration is not preferable because when the substrate 200 is formed with the mold 100, charges migrate between the mold 100 and the substrate 200 when the holding block 41 comes close to the table 21, and one of the mold 100 and the substrate 200 can be attracted to the other when the mold 100 is then separated from the substrate 200.

As shown in FIG. 1, the mold drive mechanism 50 moves the holding block 41 holding the mold 100 in an adsorptive manner as described above in a direction (hereinafter referred to as Z direction) orthogonally crossing the directions of movement of the table 21 (X and Y directions) by the movement mechanism 30.

The mold drive mechanism 50 is comprised of a ball screw 51 having an axis line in the up-and-down direction, and a motor 52 rotationally driving the ball screw 51. The ball screw 51 is rotationally driven by the motor 52 to move up and down in the Z direction with respect to an upper base 54 provided on the base mount 31 via a pole 53.

A lower base 55 fixed on the pole 53 is provided with a support member 57 in such a manner that the support member 57 can move only in the up-and-down direction with its rotation restricted, with respect to a sleeve 56 provided integrally with the lower base 55. The lower end of the ball screw 51 is connected to the upper part of the support member 57 via a bearing mechanism 58, whereby only the up-and-down movement of the ball screw 51 is transmitted to the support member 57, and its rotation is not transmitted.

The holding block 41 is fixedly mounted on the lower surface of the support member 57.

According to the mold drive mechanism 50, when the ball screw 51 is rotationally driven by the motor 52, the ball screw 51 moves up and down in the Z direction with respect to the upper base 54 and the lower base 55. The holding block 41 holding the mold 100 moves up and down with the up-and-down movement of the ball screw 51. As a result, the mold 100 can move up and down in the Z direction, and come close to or separate from the substrate 200 held on the table 21.

The alignment mechanism 60 is intended for correcting a relative positional relation between the mount 100 and the substrate 200 held on the table 21 when the substrate 200 is moved in the X and Y directions by the movement mechanism 30. For such an alignment mechanism 60, various configurations may be used, but one example thereof comprises a camera 61 photographing an alignment mark formed at a predetermined position on the substrate 200, and camera movement mechanisms 62 and 63 for moving the camera 61 in the X and Y directions.

In the alignment mechanism 60 having such a configuration, the movement mechanism 30 is controlled by the controller based on the position of the alignment mark photographed by the camera 61 to correct the position of the substrate 200 relative to the mold 100.

As shown in FIG. 3, the mold 100 is provided on its lower surface 100a with projections and depressions 101 for forming a predetermined pattern. The mold 100 is formed with so called a mold material such as a metal or ceramic, and its lower surface 100a is subjected to precise mechanical processing, whereby the projections and depressions 101 can be formed. Alternatively, a predetermined pattern is formed on a silicon substrate as a matrix of the mold 100 by a semiconductor fine processing technique such as etching, a metal is then plated on the surface of the silicon substrate or the like by a nickel plating method (electro-casting (electroforming) method) or the like, and the metal plated layer is separated, whereby the mold 100 having the projections and depressions 101 can be formed.

Because the mold 100 is heated and cooled by the heater 42 of the holding block 41 and the cooling block 43 as described later, its thickness is preferably reduced where possible to minimize its heat capacity.

For the substrate 200 to be processed, as shown in FIG. 4A, molding materials having originally the form of a substrate, including, for example, resin materials such as polycarbonate and polyimide, glass materials, silicon, gallium arsenide, sapphire, magnesium oxide and the like, may be used. As shown in FIG. 4B, for forming a resin film, a photoresist and a wiring pattern, a substrate having a thin film coating layer 202 of a metal film of aluminum, gold, silver or the like formed on the surface of a substrate main body 201 composed of a silicon wafer, glass wafer or the like may be used as the substrate 200.

In the case of FIG. 4A, a pattern is transferred to the surface area of the substrate 200 by the projections and depressions 101 of the mold 100 shown in FIG. 3, and in the case of the substrate 200 of FIG. 4B, a pattern of the projections and depressions 101 of the mold 100 is transferred to the coating layer 202, but in both cases, the pattern is transferred to the surface area of the substrate 200, and therefore in the following description, an area to which the pattern is transferred will be referred to simply as "surface area of substrate 200", and this expression shall imply both cases of FIGS. 4A and 4B.

In the pattern formation device 10, the projections and depressions 101 of a predetermined pattern formed on the lower surface 100a of the mold 100 are pressed against the substrate 200 with a predetermined pressure to transfer to only the surface area of the substrate 200.

A pattern forming step in the pattern formation device 10 described above will be described below. Basically, the operation of the pattern formation device 10 described below is automatically controlled by a controller (not shown).

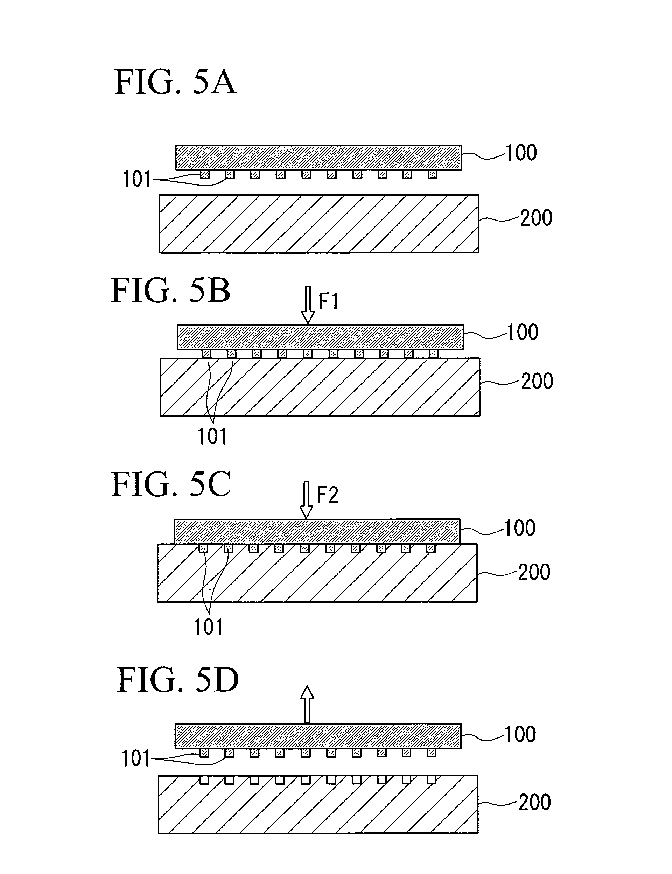

In the pattern formation device 10, schematically, the mold 100 is previously heated to a temperature equal to or higher than the glass transition temperature of the substrate 200 as shown in FIG. 5A, the mold 100 is pressed against the substrate 200 in this state as shown in FIG. 5B, and the substrate 200 is heated. The mold 100 is pressed for a certain time period to retain a load as shown in FIG. 5C, and the mold 100 is then cooled, and separated from the substrate 200 as shown in FIG. 5D. In the series of steps, the surface area of the substrate 200 is formed into a shape matching the projections and depressions 101 of the mold 100.

More specifically, a predetermined mold 100 is first held on the holding block 41 in an adsorptive manner. In this state, the mold drive mechanism 50 positions the holding block 41 at the elevated end of a predetermined stroke region, and the mold 100 held by the holding block 41 and the table 21 are positioned with a distance from each other.

When the substrate 200 to be processed is set on the table 21, the substrate 200 is vacuum-adsorbed.

Subsequently, the camera 61 of the alignment mechanism 60 is moved by the camera movement mechanisms 62 and 63, and alignment marks formed on the substrate 200 fixed on the table 21 in an adsorptive manner and formed on the mold 100 are photographed by the camera 61. The movement mechanism 30 is controlled by the controller based on the positions of the photographed alignment marks to carry out calibration (initial setting) for correcting the position of the substrate 200 relative to the mold 100.

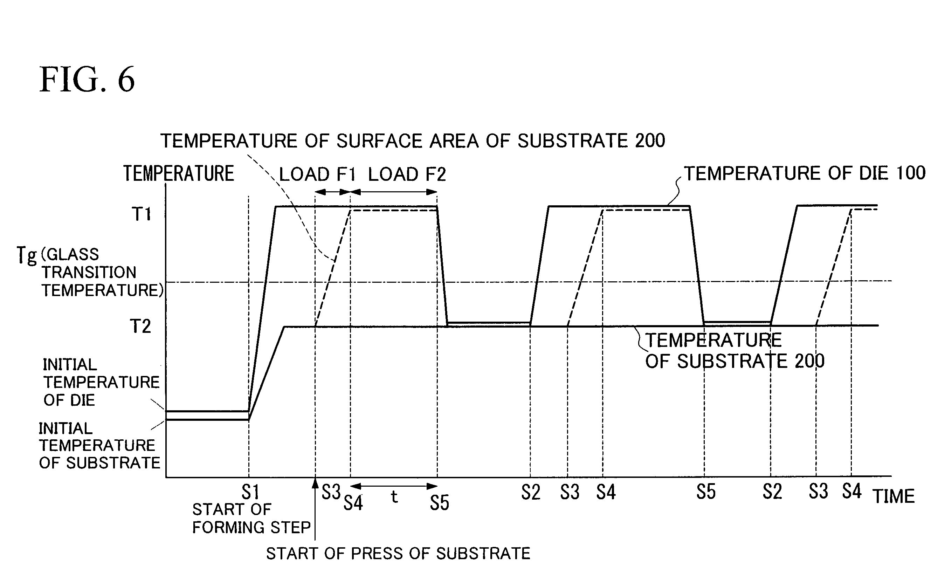

Then, the mold 100 is pressed against the substrate 200 to transfer a predetermined pattern, but prior to this, the heater 22 included in the table 21 and the heater 42 provided on the holding block 41 are each previously turned on in predetermined timing S1 by the controller as shown in FIG. 6. A cooling medium such as cooling water is passed through the channel 44 of the cooling block 43.

In this state, i.e. before the mold 100 is pressed against the substrate 200, the mold 100 is kept at a predetermined temperature T1 equal to or higher than the glass transition temperature Tg, and the substrate 200 is kept at a predetermined temperature T2 lower than the glass transition temperature Tg of a material forming the surface area as a processing obj ect area of the substrate 200 by transmission of heat from the heater 42 of the holding block 41 and the heater 22 of the table 21.

Then, the table 21 is moved in the X and Y directions by the movement mechanism 30, whereby a predetermined region of the substrate 200 fixed on the table 21 in an adsorptive manner is so positioned as to face the mold 100 held by the holding block 41.

Then, the mold 100 held by the holding block 41 is moved in the Z direction by the mold drive mechanism 50 to come close to the substrate 200 held by the table 21. In predetermined timing S3 after the temperature of the projections and depressions 101 of the mold 100 rises to the predetermined temperature T1, the movement of the mold 100 held by the holding block 41 is stopped by the mold drive mechanism 50 when the mold 100 comes into contact with the surface of the substrate 200 as shown in FIG. 5B (the amount of press of the mold 100 against the surface of the substrate 200 in this state is a first amount of press). Then, heat is transmitted to the surface area of the substrate 200 from the mold 100 the temperature of which has risen to the temperature T1 equal to or higher than the glass transition temperature Tg, whereby the temperature of the surface area of the substrate 200 rise to a temperature close to the temperature T1 of the mold 100. At this time, the temperature of areas other than the surface area of the substrate 200 which is in direct contact with the projections and depressions 101 of the mold 100 does not so much rise.

In timing S4 in which the temperature of the surface area of the substrate 200 rises to a temperature close to the temperature T1 equal to or higher than the glass transition temperature Tg, or at least a temperature close to the glass transition temperature Tg, the mold 100 held by the holding block 41 is further moved toward the substrate 200 side by the mold drive mechanism 50 as shown in FIG. 5C. As a result, the mold 100 is pressed against the surface of the substrate 200 by an amount greater than the first amount of press (the amount of press of the mold 100 against the surface of the substrate 200 in this state is a second amount of press), and the pattern of the projections and depressions 101 of the mold 100 is transferred to the surface area of the substrate 200.

In the operation described above, the movement of the mold 100 by the mold drive mechanism 50 is stopped in a state in which the mold 100 is in contact with the surface of the substrate 200 between the timing S3 and the timing S4. That is, between the timing S3 and the timing S4, a predetermined load F1 giving no permanent distortion in a state in which the temperature of the surface area of the substrate 200 is lower than the glass transition temperature Tg is applied from the mold 100 to the substrate 200 by control of the controller functioning as a load controller.

After the timing S4, the mold 100 is moved to the substrate 200 side by the mold dive mechanism 50, whereby a predetermined load F2 different from the load F1 for giving a permanent distortion to carry out forming in a state in which the temperature of the surface area of the substrate 200 is higher than the glass transition temperature Tg is applied from the mold 100 to the substrate 200.

In this way, the load applied from the mold 100 to the substrate 200 is varied in two phases, one for the load F1 and the other for the load F2, and heat of the mold 100 is transmitted to the substrate 200 side to soften the surface area of the substrate 200 when the load is the load F1 in a state in which the mold 100 and the substrate 200 are in contact with each other, and then the load is shifted to the load F2 to carry out forming with the mold 100.

Load control when the mold 100 is pressed against the substrate 200 by the mold drive mechanism 50 can be performed by detecting a load acted between the mold 100 and the substrate 200 by a load detection sensor (load cell (not shown) incorporated in the holding block 41 or table 21, and performing feedback control of a torque generated by the motor 52 so that the detected load becomes a predetermined load.

It is also possible to perform control simply by a movement stroke of the mold 100 in the mold drive mechanism 50, rather than feedback control by the load.

In timing S5 in which preset predetermined time t elapses after the timing S4, the amount of current supplied to the heater 42 of the holding block 41 is decreased. As a result, the temperatures of the holding block 41, the mold 100 and the substrate 200 decrease but at this time, the cooling block 43 having a temperature equal to or lower than the glass transition temperature Tg is provided on the upper surface side of the holding block 41, and therefore the temperatures of the mold 100 and the substrate 200 quickly decreases to, for example, a temperature close to the temperature T2 of the table 21.

In timing in which predetermined time further elapses after the timing S5 in which the amount of current supplied to the heater 42 of the holding block 41 is decreased, the mold drive mechanism 50 is actuated, and the mold 100 is separated from the substrate 200 held by the table 21 to remove the mold as shown in FIG. 5D.

As a result, a predetermined pattern formed by the projections and depressions 101 of mold 100 is transferred to and formed on the surface area of the substrate 200.

After a pattern is once transferred to the substrate 200 with the mold 100 as described above, the amount of current passed through the heater 42 of the holding block 41 in predetermined timing S2 is increased, and the mold 100 held by the holding block 41 is thereby set to the temperature T1 equal to or higher than the glass transition temperature Tg again while the substrate 200 is moved to a next pattern formation position by the movement mechanism 30.

The timing S2 in which the amount of current passed through the heater 42 of the holding block 41 is increased is not limited as long as the temperature of the mold 100 rises to the predetermined temperature T1 equal to or higher than the glass transition temperature Tg before the projections and depressions 101 of the mold 100 come into contact with (are pressed against) the surface of the substrate 200 at the next pattern formation position.

Thereafter, a pattern can be formed at another position by carrying out the above described steps of pressing, cooling and removing the mold 100 in the same manner.

Patterns of the mold 100 can be transferred to a plurality of locations on the substrate 200 one after another by repeatedly carrying out a series of the above steps.

When the mold 100 is pressed against the substrate 200 as described above, the temperature of the substrate 200 is set to a constant temperature lower than the glass transition temperature Tg of a material of the surface area to be processed, while the temperature of the mold 100 is set to a temperature higher than the glass transition temperature Tg. If a polycarbonate (PC) resin is used as the substrate 200, for example, the temperature T2 of the substrate 200 (table 21) is set to about 140°C, which is equal to or lower than the glass transition temperature Tg, and the temperature T1 of the mold 100 is set to about 160 to 170°C, which is equal to or higher than the glass transition temperature Tg, because the glass transition temperature Tg is about 150°C in the polycarbonate resin. When the mold 100 is pressed against the substrate 200, the temperature of the mold 100 propagates to the surface area of the substrate 200, the temperature of the surface area of the substrate 200 rises first and the temperature propagates progressively throughout the substrate 200.

For example, it is preferable that the temperature T1 is set to a temperature about 20°C higher than the glass transition temperature Tg of a material forming the surface area of the substrate 200, and the temperature T2 is set to a temperature about 30 to 50°C lower than the glass transition temperature Tg. Of course, the set temperature varies depending on the type of the material, and is not uniquely fixed to the above value.

The resin or glass material forming the substrate 200 at a temperature higher than the glass transition temperature Tg is extremely deformable by an external stress, i.e. it is easily formed, and therefore the mold 100 is increasingly loaded and pressed against the substrate 200 while the temperature higher than the glass transition temperature Tg is maintained. As a result, the substrate 200 is deformed according to the shape of the mold 100, and stabilized in a state in which the shape of the projections and depressions 101 is reversely transferred.

Then, the temperature of the mold 100 is decreased to a temperature equal to or lower than the glass transition temperature Tg, and the temperature of the substrate 200 in contact with the mold 100 is decreased. At a temperature equal to or lower than the glass transition temperature Tg, the substrate 200 is hard to be deformed as in its initial state, i.e. it is hardened according to the shape of the projections and depressions 101 of the mold 100, and the pattern is fixed. When the mold 100 is separated from the substrate 200 in a state in which the temperature of the substrate 200 is equal to or lower than the glass transition temperature Tg, the surface area of the substrate 200 is brought into a state in which the shape of the projections and depressions 101 of the mold 100 is reversely transferred, and hence a pattern having a reversed shape of the projections and depressions 101 of the mold 100 is formed.

According to the above configuration, the mold 100 set at the temperature T1 equal to or higher than the glass transition temperature Tg of the surface area of the substrate 200 is pressed against the substrate 200, the pattern of the mold 100 is transferred, the mold 100 is then cooled to the temperature T2 equal to or lower than the glass transition temperature Tg, and the mold 100 is then separated from the substrate 200.

Particularly, a ceramic heater is used as the heater 42 heating the mold 100, and therefore time required for increasing the temperature of the mold 100 is only several seconds. The cooling of the mold 100 is carried out by the cooling block 43 using a cooling medium, and therefore when the amount of current introduced into the heater 42 is reduced, a cooling effect is promptly exhibited, and thus the temperature can be decreased in a short time.

In this way, if the pattern is transferred to the substrate 200 with one mold 100 multiple times one after another, in other words, if the mold 100 has a smaller size and heat capacity than the substrate 200, heating and cooling of the mold 100 by the heater 42 of the holding block 41 can be carried out in a short time.

Heat is given directly to only the surface area as a processing object area, rather than the entire substrate 200, from the mold 100 in contact with the surface area of the substrate 200 on which the pattern is formed, and therefore time for heating and cooling on the substrate 200 side can be reduced.

Further, if the mold 100 is smaller than the substrate 200, only a local area in contact with the mold 100, rather than the entire area of the substrate 200, is heated, thus making it possible to contribute to heating in a short time in this respect.

In this way, in a pattern formation on the substrate 200 with the mold 100, the efficiency of a cycle of heat applied can be improved, the throughput can be improved, and energy used can be saved.

The mold 100 for transferring the pattern to the substrate 200 with one mold 100 multiple times one after another can be small, accuracy assurance, temperature control and the like are easy compared with a large mold, and thus the cost of the mold 100 can be considerably reduced.

Because only the local area of the substrate 200 in contact with the mold 100 is heated, and the entire remaining area of the substrate 200 is kept at a temperature equal to or lower than the glass transition temperature Tg, a repeated thermal hysteresis is not added to the entire substrate 200, and the shape of a pattern once formed can be maintained with stability in the subsequent process, unlike the conventional process in which the pattern is transferred while the entire substrate is repeatedly heated and cooled.

Such a pattern formation device 10 can be realized with a mechanical structure requiring no optical system and light source, and therefore it can be fabricated at a much lower cost compared to the conventional stepper and the like, and allows the device to be downsized.

In this way, the pattern can be transferred to the substrate 200 with high efficiency and at a low cost.

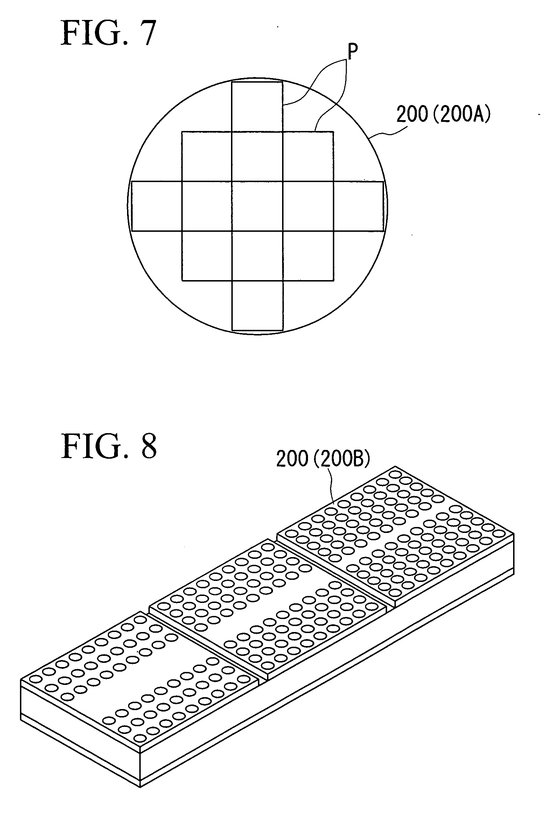

In such a pattern formation device 10, for example, a wafer 200A shown in FIG. 7 may be used as the substrate 200 to be processed. A plurality of patterns P can be transferred onto this wafer 200A. As a result, the area of the wafer 200A can be increased, and time for handling such as changing of the wafer 200A on the table 21 can be saved, thus making it possible to reduce the production cost for one molded product.

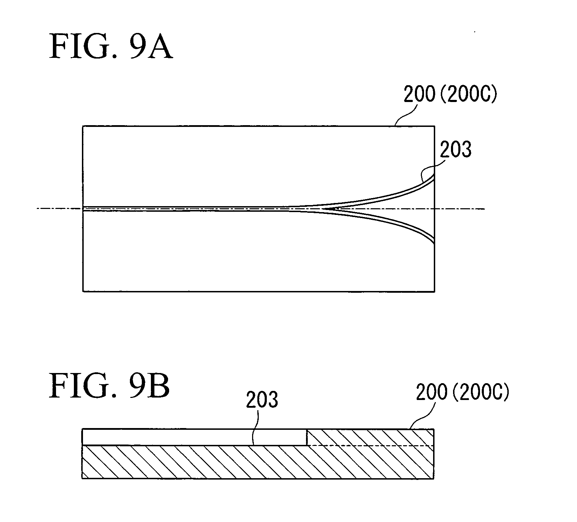

For the substrate 200, in addition, a photonic crystal 200B having very small dot shapes arranged at a fixed period as shown in FIG. 8, a semiconductor electronic circuit board having a predetermined wiring pattern, a substrate 200C having a very small channel 203 as shown in FIG. 9, and the like may be used.

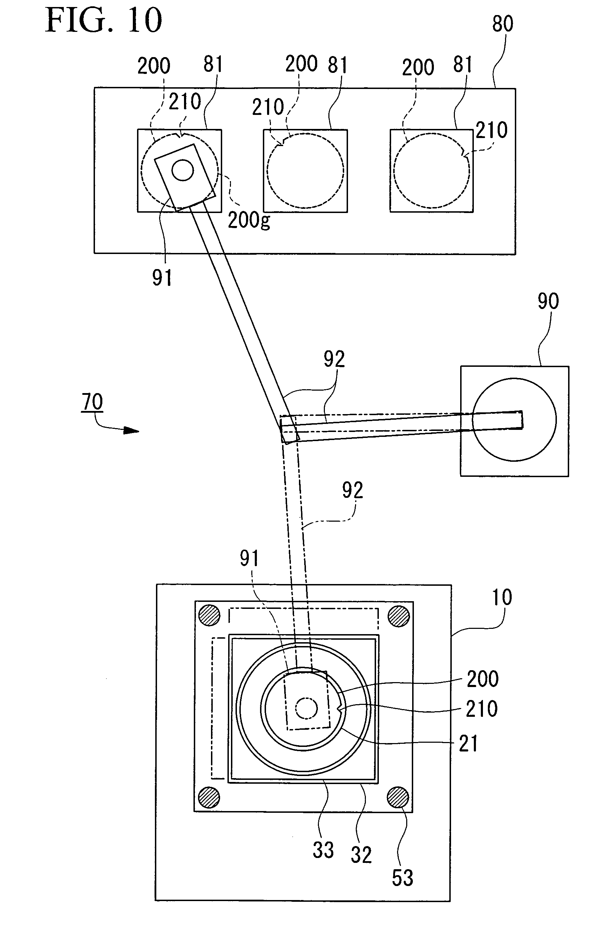

If so called continuous production, in which patterns are formed on a plurality of substrates 200 one after another using the above-mentioned pattern formation device 10, is carried out, for example, a pattern formation system 70 shown in FIG. 10 is preferably constructed.

As shown in FIG. 10, the pattern formation system 70 is comprised of a pattern formation device 10, a magazine station (magazine holding unit) 80 in which a magazine 81 conveying the substrate 200 fed to the pattern formation device 10 is set at a predetermined position, and a feeding device 90 feeding the substrate 200 to the pattern formation device 10.

The magazine 81 is used for housing a predetermined number of substrates 200 and conveying them to the pattern formation device 10 and between other steps before and after pattern formation. In the magazine 81, a plurality of substrates 200 are held in such a manner as to be stacked at intervals along the up-and-down direction.

The magazine station 80 holds one or more magazines 81 sent from the preceding step in a state in which they are stopped at predetermined positions, respectively.

The feeding device 90 takes out substrates 200 one by one from the magazine 81 held by the magazine station 80, and conveys the same onto the table 21 of the pattern formation device 10 to be set. For this purpose, the feeding device 90 comprises a substrate chucking unit 91 grasping the substrate 200, and an arm unit 92 moving the substrate chucking unit 91 between each magazine 81 held by the magazine station 80 and the table 21 of the pattern formation device 10. Here, in the magazine 81, a plurality of substrates 200 are held in such a manner to be stacked at intervals along the up-and-down direction, and therefore the arm unit 92 can move the substrate chucking unit 91 along the up-and-down direction.
Alternatively, a mechanism moving the magazine 81 up and down may be provided on the magazine station 80 side so that the substrate chucking unit 91 can always take out the substrate 200 from the magazine 81 at a fixed height.

When the substrate 200 is set on the table 21 of the pattern formation device 10 by the feeding device 90, a position adjustment mechanism (not shown) for setting the substrate 200 with high positional accuracy is provided in one of the magazine 81 and the pattern formation device 10. Thus, the substrate 200 has a notch 210 (or orientation flat (commonly called ori-fla)) formed on its outer periphery.

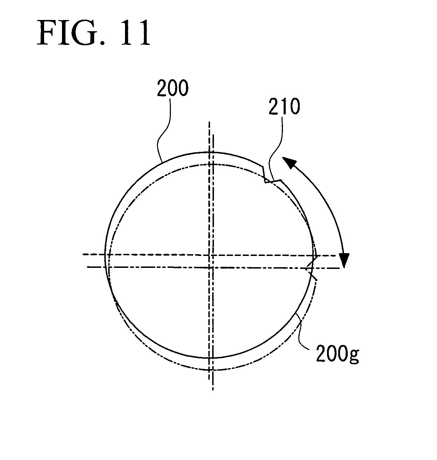

The position adjustment mechanism comprises a rotation mechanism rotating the substrate 200, andadetectionmechanism detecting the position of an outer periphery edge 200g of the rotating substrate 200 and the position of the notch 210. As shown in FIG. 11, the substrate 200 is rotated by one turn by the rotation mechanism and at this time, and the position of the outer periphery edge 200g is detected by the detection mechanism, whereby the amount of eccentricity of the substrate 200 to the rotation mechanism can be detected and based thereon, a positional deviation in the X-Y direction along the surface of the substrate 200. The position of the notch 210 during rotation is detected, whereby the orientation of the substrate 200 can be detected.

In the feeding device 90, the position and the orientation of the substrate 200 of the pattern formation device 10 are corrected based on the position and the orientation of the substrate 200 detected by the position adjustment mechanism, and the substrate 200 is set on the table 21.

In this pattern formation system 70, a predetermined number of substrates 200 are housed in the magazine 81 and conveyed from the preceding step. When the magazine 81 reaches the magazine station 80, the magazine station 80 holds the magazine 81 at a predetermined position.

In the feeding device 90, the substrate chucking unit 91 is moved by the arm unit 92 to a position of the substrate 200 to be taken out from the magazine 81. Subsequently, the substrate 200 in the magazine 81 is chucked by vacuum adsorption or mechanical operation by the substrate chucking unit 91, the arm unit 92 is actuated, and the substrate 200 is taken out from the magazine 81.

The taken substrate 200 is moved to a predetermined position on the table 21 of the pattern formation device 10 by actuating the arm unit 92 while the substrate 200 remains chucked by the substrate chucking unit 91. Then, chucking by the substrate chucking unit 91 is released to set the substrate 200 on the table 21.

In the process of a series of operations described above, the position and the orientation of the substrate 200 are corrected by the position adjustment mechanism.

After the substrate 200 is set on the table 21, a pattern is formed on the substrate 200 by the pattern formation device 10 according to the process described above.

After the pattern is formed, the substrate 200 on the table 21 may be removed, sent back to the magazine 81 and housed therein by the feeding device 90 according to a procedure opposite to that described above, or may be conveyed to the subsequent step by another conveyance means.

Then, the substrate 200 on which a pattern is to be formed next is taken out from the magazine 81 by the feeding device 90, and operations same as those described above are repeated to feed the substrate 200 to the pattern formation device 10, form a pattern and take out the substrate 200.

In this way, patterns can be continuously formed on a plurality of substrates 200 in the pattern formation device 10.

If a plurality of magazines 81 are set in the magazine station 80, the feeding device 90 changes the magazine 81 from which the substrate 200 is taken out to another magazine positioned in the magazine station 80 at the time when formation of patterns on all substrates 200 in the magazine 81 is completed.

As a result, while patterns are formed on substrates 200 taken out from one magazine 81, the magazine 81 for which formation of patterns on all substrates 200 contained has been completed can be conveyed from the magazine station 80, and the magazine 81 containing unprocessed substrates 200 sent from the preceding step can be conveyed into the magazine station 80, thus making it possible to perform more efficient continuous processing.

In this way, efficiency of production of the substrate 200 can be improved by the pattern formation system 70 allowing the substrate 200 to be continuously processed in the pattern formation device 10. Since an operator does not manually set the substrate 200 in the pattern formation device 10, but this operation can be automatically carried out by the feeding device 90, entrance of particles (foreign matters) can be prevented, the incidence of defective products can be reduced and the throughput can be improved. The substrate 200 is mechanically set on the table 21 by the feeding device 90, whereby the positional accuracy of the substrate 200 relative to the table 21 can be considerably improved compared to the case of manually setting the substrate 200 on the table 21, and the position adjustment mechanism is provided, whereby further accurate registration can be performed.

In the embodiment described above, the mold 100 is not specifically limited in its material and production method as long as fine patterns can be formed. For example, for the material of the mold 100, ceramic materials and carbon based materials, especially glass carbon may be used in addition to general metal materials. If the mold 100 is formed with these materials, a fine pattern may be formed by laser processing, or a fine pattern may be formed by other methods such as a method in which the material described above is filled in a master mold having a master pattern of a fine pattern previously formed thereon, and cured.

The substrate 200 may be a substrate in which the molding material of surface area of the substrate is integral with the substrate, for example a resin substrate and a glass substrate, or a substrate having a molding material thinly formed on the substrate, for example a silicon substrate and a glass substrate having a resin film formed thereon, or the like, and the combination of the molding material and the substrate is not specifically limited.

The heater 42 of the holding block 41 is a ceramic heater, and the cooling block 43 has a cooling structure using a cooling medium, but the present invention is not particularly limited thereto as long as heating and cooling can be carried out quickly, and heating by a laser or ultrasonic wave, cooling by a Peltier element, and the like may be used.

The movement mechanism 30 and the mold drive mechanism 50 are not limited to a mechanism using ball screws 34, 35 and 51, and an oil-hydraulic mechanism or pneumatic mechanism may be used.

The method of position control in the movement mechanism 30 is not limited as long as desired positioning can be realized.

Further, for the magazine station 80, the feeding device 90 and the like constituting the pattern formation system 70, their detailed structures, operations and the like can be appropriately changed as long as they can perform the functions described above, and this is, of course, a matter of design.

Furthermore, the configurations described in the above embodiment can be adopted and rejected or changed to other configurations within the spirit of the present invention.

### Industrial Applicability

According to the present invention, a preheated mold is pressed against a substrate to be a processing object to transmit heat of the mold to the surface area of the substrate, and then a pattern is formed on the surface area of the substrate with the mold. As a result, not the entire substrate but the moldhavinga small heat capacity can be heated to formapattern, and the pattern can be transferred to the substrate with high efficiency. In this device, use of a costly optical system and the like is not required, thus making it possible to reduce the cost.

## Claims

1. A pattern formation device comprising:
a mold for forming a predetermined pattern on a substantially plate-like substrate to be a processing object;
a heating unit heating said mold;
a substrate holding unit holding said substrate; and
a press mechanism pressing said mold against said substrate held by said substrate holding unit.

2. The pattern formation device according to claim 1, wherein said mold heated by said heating unit is pressed against said substrate by said press mechanism to heat said substrate to a temperature close to, equal to or higher than the glass transition temperature thereof, and a predetermined pattern is formed on said substrate with said mold.

3. The pattern formation device according to claim 1, wherein said substrate holding unit comprises a temperature maintaining unit keeping said substrate held by said substrate holding unit at a temperature equal to or lower than the glass transition temperature thereof.

4. The pattern formation device according to claim 1, wherein said heating unit comprises a controller controlling the temperature of said mold, and
said controller performs control so that said mold is held at a temperature lower than the glass transition temperature of said substrate in a state in which said mold and said substrate are separated from each other, and said mold is held at a temperature close to, equal to or higher than the glass transition temperature of said substrate in a state in which said mold is pressed against said substrate.

5. The pattern formation device according to claim 1, further comprising a cooling unit cooling said mold.

6. The pattern formation device according to claim 1, further comprising a substrate heating unit heating said substrate held by said substrate holding unit.

7. The pattern formation device according to claim 1, wherein said press mechanism switches the amount of press of said mold against said substrate in a plurality of levels,
heat of said mold heated by said heating unit is transmitted to said substrate when the amount of press of said mold against substrate is a first amount of press, and
a pattern is formed on said substrate with said mold when the amount of press of said mold against said substrate is a second amount of press different from said first amount of press.

8. The pattern formation device according to claim 1, wherein said mold forms a pattern on only the surface area of said substrate.

9. A pattern formation device comprising:
a mold for forming a predetermined pattern on a processing object;
an object holding unit holding said processing object;
a press mechanism pressing said mold against said processing obj ect held by said processing object holding unit; and
a heating means heating either one of said processing object and said mold which has a heat capacity smaller than the other.

10. The pattern formation device according to claim 9, further comprising a movement mechanism moving said mold and/or said processing object so that said mold faces a plurality of regions of said processing object held by said object holding unit; wherein said heating means heats said mold.

11. The pattern formation device according to claim 9, wherein in said heating means, the temperature of said mold is varied within a range which is based on a temperature at which said processing object is softened, according to timing in which said mold is pressed against said processing object by said press mechanism.

12. The pattern formation device according to claim 9, wherein said press mechanism further comprises a load controller controlling a load applied from said mold to said processing object, and
said load controller applies a first load and a second load different from said first load one after another from said mold to said processing object.

13. The pattern formation device according to claim 9, wherein said heating means uses a ceramic heater.

14. The pattern formation device according to claim 9, wherein said pattern formation device further comprises a mold holding unit holding said mold and connected to said press mechanism, and
said mold holding unit is in surface contact with said mold and holding said mold by an electrostatic force.

15. A pattern formation method for forming a predetermined pattern on a substrate with a mold, comprising:
a heating step of heating said mold to a predetermined temperature based on the glass transition temperature of said substrate; and
a pattern forming step of pressing said mold against said substrate to form said pattern.

16. The pattern formation method according to claim 15, further comprising a cooling step of cooling said mold to a predetermined temperature equal to or lower than the glass transition temperature of said substrate after pressing said mold against said substrate; and a mold removing step of separating said cooled mold from said substrate, wherein a step comprising said heating step, said pattern forming step, said cooling step and said mold removing step is repeatedly carried out for each of a plurality of regions of said processing object.

17. The pattern formation method according to claim 15, further comprising a heat transmitting step of transmitting heat of saidmold to said substrate prior to said pattern forming step.

18. A pattern formation system comprising:
a pattern formation device forming a predetermined pattern on a substantially plate-like substrate to be a processing object; and
a feeding device feeding said substrate to said pattern formation device and taking out the same,
said pattern formation device comprising:
a mold for forming a predetermined pattern on said substrate;
a heating unit heating either one of said substrate and said mold which has a heat capacity smaller than the other;
a substrate holding unit holding said substrate; and
a press mechanism pressing said mold against said substrate held by said substrate holding unit.

19. The pattern formation system according to claim 18, wherein said pattern formation system further comprises a magazine holding unit holding a magazine containing a plurality of said substrates, and
said feeding device takes out said substrates one by one from said magazine held by said magazine holding unit, and feeds the same to said pattern formation device.

20. The pattern formation system according to claim 19, wherein said magazine holding unit can hold a plurality of said magazines.
